# DEMANDE DE BREVET EUROPEEN

(11) **EP 0 642 996 A1**
(43) Date de publication de la demande: **15.03.1995**
(21) Numéro de dépôt: 94113991.7
(22) Date de dépôt: 06.09.1994
(51) Int. Cl.: B65G 15/20

(54) **Dispositif pour la mise en mouvement de plaques orientées verticalement**

(30) Priorité: 09.09.1993 IT VI930143
(71) Demandeur: CASTELMEC S.a.s di ROSSO VALERIO & C., I-36056 Tezze sul Brenta, Vicenza (IT)
(72) Inventeur: Bertoncello,Oriano, I-35018 San Martino Di lupari (PD) (IT); Rosso, Valerio, I-35013 Cittadella (PD) (IT)
(74) Mandataire: Bettello, Pietro, Dott. Ing.

(57) **Abrégé**

Le dispositif comprend au moins une paire (2 ou 3) de tapis transporteurs qui sont disposés parallèlement en se faisant face et dont les tambours d'actionnement sont orientés suivant des axes verticaux ; la plaque à mettre en mouvement (1) est introduite entre ces tapis, l'un au moins de ceux-ci étant susceptible d'être déplacé suivant une direction transversale par rapport à l'avancement de la plaque, afin de permettre l'adaptation de l'ensemble à l'épaisseur de celle-ci.

## Description

La présente invention a pour objet un dispositif pour la mise en mouvement de plaques, notamment de plaques de verre, disposées suivant une orientation substantiellement verticale.

Dans l'état actuel de la technique, pour le déplacement de plaques de verre, on a généralement recours à des tapis transporteurs horizontaux ou à des chemins de rouleaux qui assurent l'entraînement de chaque plaque.

Lorsque la plaque en verre est du type à isolation, elle comporte sur son bord externe une couche d'une matière de scellement qui garantit l'étanchéité parfaite de l'espace libre isolant. Quand une telle plaque à isolation, avec sa jointure extérieure remplie d'une matière de scellement collante, se déplace sur les rouleaux, cette matière de scellement, débordant de son logement, vient adhérer aux rouleaux en les salissant à un point tel qu'il est fréquemment nécessaire d'arrêter la machine pour procéder à un nettoyage.

Pour surmonter ces inconvénients, on a proposé différents systèmes d'entraînement pour les plaques à isolation, qui assurent leur déplacement sans comporter aucun contact avec le bord extérieur au niveau duquel est logée la matière de scellement.

Le but de la présente invention est de réaliser un dispositif propre à opérer la mise en mouvement de la plaque dans les conditions ci-dessus indiquées, qui se révèle toutefois plus fonctionnel et plus efficace que les agencements analogues de type connu.

Le dispositif suivant l'invention est défini à la revendication 1.

En fait le dispositif comprend au moins une paire de tapis transporteurs qui sont disposés parallèlement en se faisant face et qui sont actionnés à l'aide de tambours orientés verticalement, les plaques à entraîner étant introduites entre lesdits tapis ; il est en outre prévu que l'un au moins de ceux-ci puisse être déplacé suivant une direction transversale à la direction d'avance des plaques afin de permettre l'adaptation de l'ensemble à l'épaisseur de celles-ci.

De cette manière, la prise des plaques s'effectue au-dessus du bord en question, en évitant les inconvénients ci-dessus indiqués et en permettant surtout un réglage aisé de la pression d'application des tapis contre les plaques. De manière avantageuse, sur le bloc qui maintient en contact le tapis mobile dans le sens vertical et la surface de la plaque est insérée une épaisseur d'une matière élastique, de sorte que la force de poussée est mieux équilibrée et plus régulière, en obtenant ainsi un entraînement plus sûr.

Une autre caractéristique de l'invention porte sur le système d'entraînement des tapis transporteurs, lequel système permet à l'aide d'un moto-réducteur unique d'actionner en synchronisme parfait deux paires de tapis transporteurs disposées l'une à la suite de l'autre.

Cette solution se révèle d'emploi particulièrement avantageux dans l'opération de scellement du pourtour des plaques de verre à isolation, où il est nécessaire d'interrompre le système d'entraînement pour permettre de travailler sur toute la longueur du pourtour de la plaque.

Le dessin annexé, donné à titre d'exemple, permettra de mieux comprendre l'invention, les caractéristiques qu'elle présente et les avantages qu'elle est susceptible de procurer :
La fig. 1 est une vue en élévation par l'avant du dispositif suivant l'invention.
La fig. 2 est une vue en plan par dessus de celui-ci.
Les figs. 3 et 4 sont des vues de détail, respectivement en élévation et en plan par dessus, le dispositif étant représenté à la position de repos correspondant à la pleine ouverture.
Les figs. 5 et 6 sont des vues semblables, respectivement en élévation et en plan par dessus, le dispositif étant ici à la position de fonctionnement.

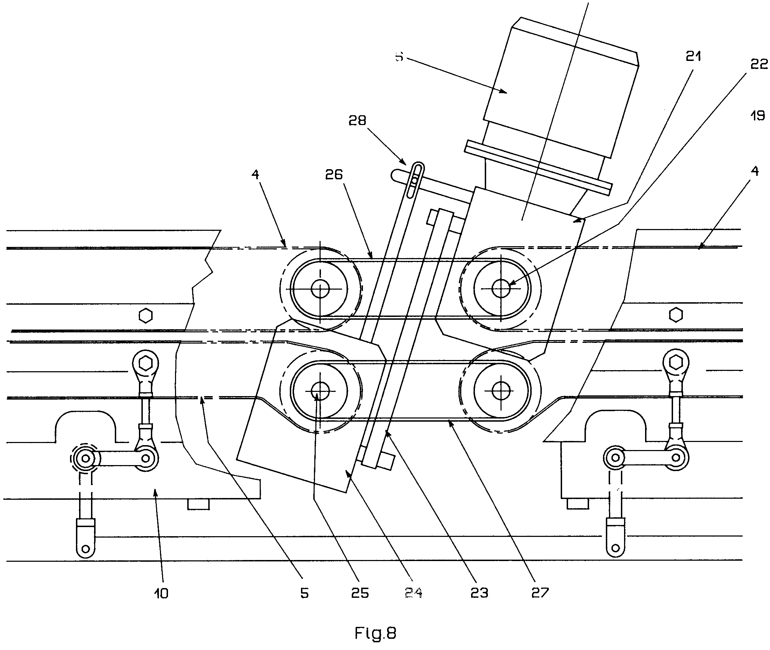

Les figs. 7 et 8 sont des vues en plan par le haut du mécanisme d'entraînement, respectivement représenté à la position de repos et à la position de fonctionnement.

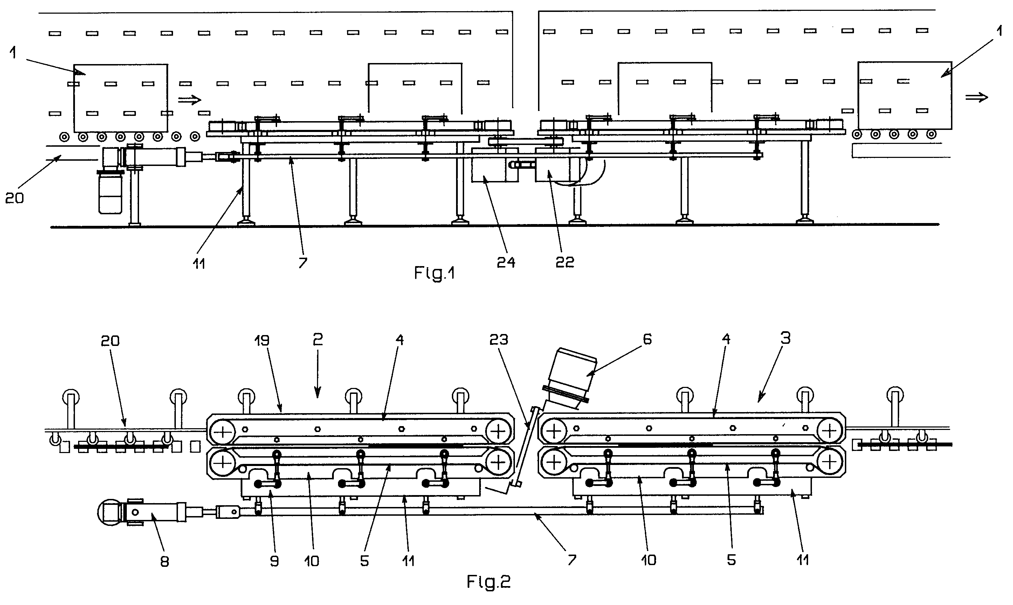

Comme on peut bien le voir en fig. 1 et 2, le dispositif suivant l'invention est placé à la suite d'un transporteur à rouleaux usuel, duquel proviennent les plaques 1 à déplacer.

Le dispositif est essentiellement constitué par deux paires de tapis transporteurs 2 et 3, disposées l'une à la suite de l'autre, l'axe des tambours d'entraînement étant orienté verticalement. Chaque paire comprend un tapis fixe 4 solidaire de la structure du transporteur, et un tapis 5, mobile dans le sens horizontal.

Les deux paires de tapis 2 et 3 sont mises en mouvement par le motoréducteur 6 à travers un mécanisme de renvoi qui sera décrit en détail plus loin.

L'action de rapprochement ou d'éloignement du tapis mobile 5 par rapport à la plaque 1 résulte du déplacement longitudinal d'une barre 7 dont une extrémité est commandée par un poussoir 8 ; à cette barre 7 sont associés un mécanisme de bielle-manivelle 9 qui agit à son tour sur une plate-forme 10, laquelle supporte le tapis 5 sus-mentionné et prend appui sur la structure de base 11.

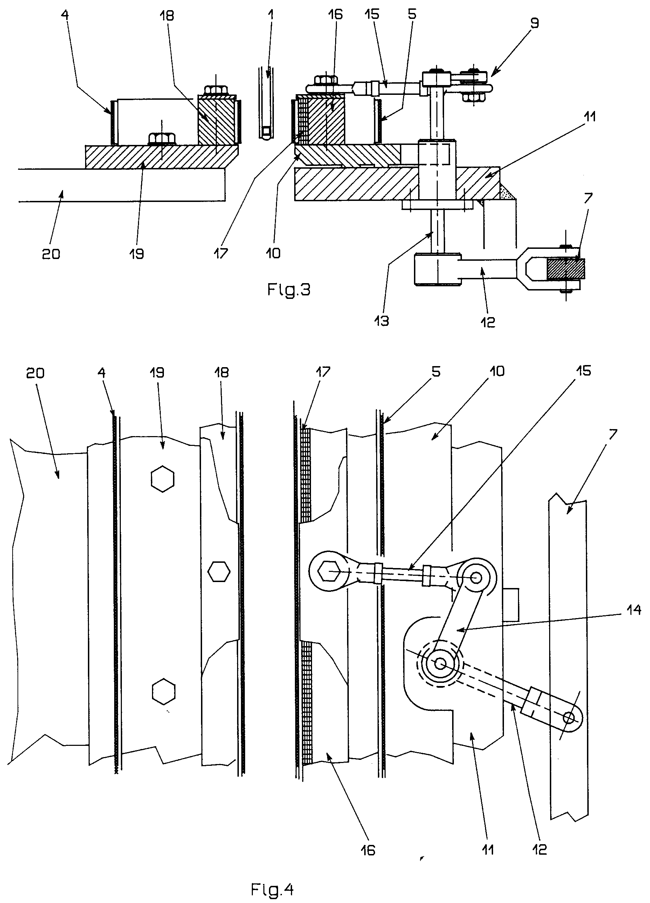

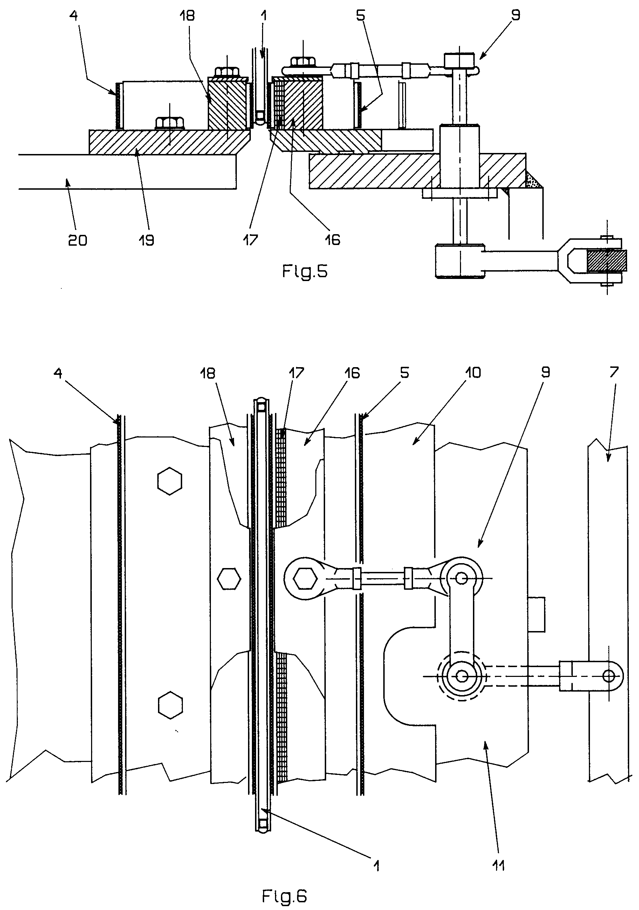

Comme on peut le voir en fig. 3 à 6, le mécanisme de bielle-manivelle 9 comprend une fourchette 12 qui est attelée à la barre 7 de manière à faire tourner un pivot vertical 13 porté par la structure 11 ; ce pivot porte à son extrémité supérieure une bielle 14 attelée à un tirant 15.

L'extrémité de ce dernier est articulée à un profilé 16 qui est à son tour solidaire du plateau mobile 10. Ce profilé 16, disposé à l'intérieur du tapis transporteur 5, fait fonction de poussoir en assurant le contact de la partie du tapis sus-indiqué avec la plaque 1.

Une caractéristique remarquable du dispositif réside dans le fait que pour augmenter la pression de poussée dans la zone de contact susmentionnée entre le tapis 5 et le profilé 16, il est inséré une épaisseur 17 d'un matériau élastique. A l'intérieur du tapis transporteur 4 est placé un profilé 18 qui joue le rôle de face d'appui dudit tapis avec la plaque 1.

Le profilé 18 est solidaire d'un plateau 19 qui supporte le tapis 4 et qui prend appui sur le bâti du transporteur à rouleaux 20.

Le déplacement longitudinal de la barre 7, à l'aide du mécanisme de bielle-manivelle 9, opère le rapprochement du tapis mobile 5 par rapport au tapis fixe 4 de façon telle que la plaque 1 reste emprisonnée entre les deux tapis précités et est entraînée vers l'avant par le mouvement de ceux-ci.

Le mouvement synchronisé des deux paires de tapis 2 et 3 est obtenu par l'action du moto-réducteur 6 dont le carter 21 est monté fou sur un pivot 22, solidaire du plateau fixe 19. Une courroie crantée 23 met en mouvement un réducteur 24 qui est lui même monté fou sur un pivot 25, lequel est fixé au plateau mobile 10.

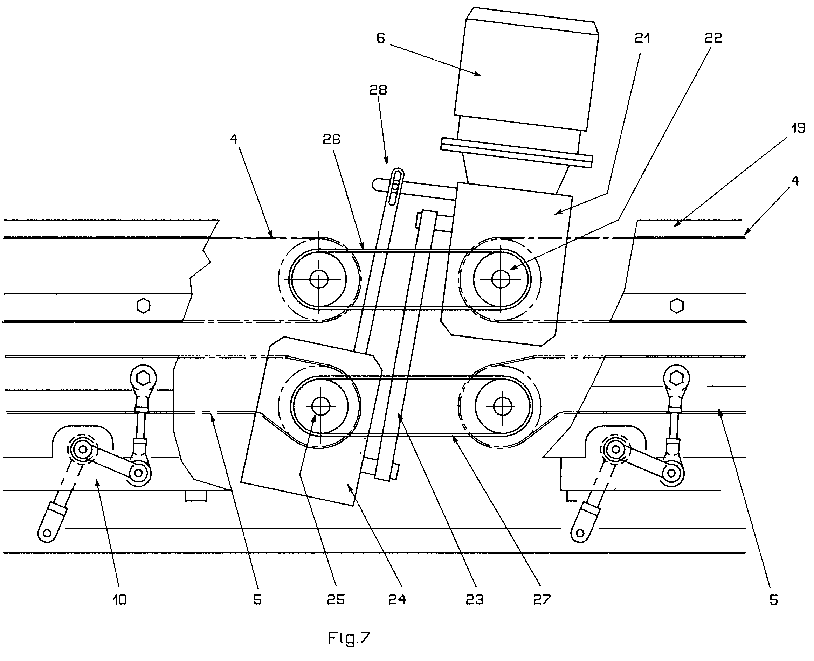

Comme on peut le voir en fig. 7, par une transmission à courroie 26, on assure l'entraînement parfaitement synchronisé des deux tapis transporteurs 4.

De la même manière, au moyen d'une transmission à courroie 27, les deux tapis transporteurs 5 sont mis en mouvement de manière parfaitement synchronisée.

De manière avantageuse, au cours du déplacement transversal du tapis 5 et du plateau 10 correspondant, l'écartement entre les deux réducteurs, à savoir celui fixe 22 et celui mobile 24, est maintenu à une valeur constante grâce à une liaison articulée 28 qui agit de façon à ce que le carter ou réducteur 21 tourne autour de son pivot 22, tandis qu'au cours de son déplacement rectiligne transversal, le réducteur 24 tourne sur son pivot 25, ce qui a pour effet que la courroie de transmission 23 se trouve toujours tendue pour assurer sa fonction.

## Revendications

1. Dispositif pour la mise en mouvement de plaques orientées de manière verticale, caractérisé en ce qu'il comprend au moins une paire (2, 3) de tapis transporteurs qui sont disposés parallèlement en se faisant face et dont les tambours d'actionnement sont orientés suivant des axes verticaux, les plaques à entraîner (1) étant introduites entre lesdits tapis tandis qu'il est prévu que l'un au moins de ceux-ci est susceptible de se déplacer suivant une direction transversale par rapport à la direction d'avancement des plaques, afin de permettre l'adaptation de l'ensemble à l'épaisseur de celle-ci.

2. Dispositif suivant la revendication 1, caractérisé en ce qu'à l'intérieur de l'un au moins des deux tapis transporteurs, dans la partie de ce tapis qui est mise en contact avec les plaques (1), il est prévu une épaisseur de matière élastique (17) qui est solidaire de moyens pour repousser cette épaisseur contre le tapis et ainsi contre les plaques.

3. Dispositif suivant l'une quelconque des revendications 1 et 2, caractérisé en ce que l'un des deux tapis (5) est déplacé dans le sens transversal à l'aide d'une structure qui comprend une barre (7) mobile suivant une direction parallèle à celle de l'avance de la plaque, laquelle barre est reliée par un mécanisme de bielle-manivelle (9) à un plateau (10) qui supporte chaque tapis (5) et qui est solidaire de la structure de base du dispositif, audit plateau étant associé un profilé (16) formant moyen de poussée pour ledit tapis vis-à-vis de la plaque.

4. Dispositif suivant les revendications 2 et 3, caractérisé en ce que le mécanisme bielle-manivelle (9) comprend une fourchette (12) attelée à la barre (7) afin de faire tourner un pivot vertical (13) monté sur la structure de base (11), ce pivot portant à son extrémité supérieure une bielle (16) articulée à un tirant (15) qui à son extrémité opposée est attelé à un profilé (16) solidaire d'un plateau mobile (10).

5. Dispositif suivant l'une quelconque des revendications qui précèdent, caractérisé en ce qu'il comprend deux paires (2, 3) de tapis transporteurs disposées l'une à la suite de l'autre.

6. Dispositif suivant la revendication 5, caractérisé en ce qu'il comprend pour l'entraînement de l'ensemble des tapis des deux paires (2 et 3) un moto-réducteur unique (6) dont le carter (21) est monté fou sur un pivot (22) porté par la structure de base (19 et 20) du dispositif, lequel réducteur actionne par une courroie crantée (23) un second réducteur (24) lui-même monté fou sur un pivot (25) solidaire du plateau mobile (10), chacun de ces deux réducteurs mettant en mouvement les deux tapis (4 et 5) placés au niveau des flancs latéraux du dispositif, les deux réducteurs (21 et 25) étant attelés l'un à l'autre par un montage articulé (28) propre à maintenir à une valeur constante l'écartement de ceux-ci, quelle que soit l'épaisseur des tapis (5) dans le sens transversal.
